**Europäisches Patentamt**

**European Patent Office**

**Office européen des brevets**

(19)

(11) Veröffentlichungsnummer: **0 203 507**

**B1**

(12) # EUROPÄISCHE PATENTSCHRIFT

(45) Veröffentlichungstag der Patentschrift:
**27.12.89**

(51) Int. Cl.⁴: **G 05 B 19/417,** G 05 B 19/18,
G 05 B 19/21

(21) Anmeldenummer: **86106877.3**

(22) Anmeldetag: **21.05.86**

(54) **Schalteinrichtung für rechnergesteuerte Werkzeugmaschinen.**

(30) Priorität: **22.05.85  DE 3518300**

(43) Veröffentlichungstag der Anmeldung:
**03.12.86 Patentblatt 86/49**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**DE-A-1 638 075**
**US-A-3 746 845**
**US-A-3 777 128**
**US-A-3 783 253**
**US-A-4 171 539**

(73) Patentinhaber: **Laserlux AG, 14 rue Aldringen,
L-2953 Luxemburg (LU)**

(72) Erfinder: **Dreier, Horst E., Römerstrasse 6, D-7240
Horb 14 (DE)**

(74) Vertreter: **Ott, Elmar, Dipl.- Ing., Kappelstrasse 8,
D-7240 Horb 1 (DE)**

LIBER, STOCKHOLM 1989

**Beschreibung**

Die Erfindung betrifft eine Schalteinrichtung für Meßeinrichtungen von rechnergesteuerten Werkzeugmaschinen gemäß Oberbegriff des Hauptanspruchs.

Bei rechnergesteuerten Werkzeugmaschinen, die auch als NC-Maschinen bezeichnet werden, muß eine exakte Positionierung des zu bearbeitenden Werkstücks sichergestellt werden. Hierzu werden Laser-Positionsmeßgerate verwendet, deren Meßsignale in bestimmten Positionen einer Auswerteeinrichtung bzw. einem Rechner zugeführt werden. Bei bekannten Anlagen werden zu diesem Zweck die Meßwerte durch manuellen Tastendruck zur Meßeinrichtung bei bestimmten Positionen übertragen. Diese verhältnismäßig eintönige Arbeit bedeutet einen beträchtlichen Personalaufwand und bringt gewisse Zeitverzögerungen bei der Meßwertübertragung mit sich.

Der Erfindung liegt die Aufgabe zugrunde, eine Schalteinrichtung für Meßeinrichtungen von rechnergesteuerten Werkzeugmaschinen zu schaffen, welche als Verbindungsgerät zwischen Werkzeugmaschine und Meßeinrichtung eine automatische Meßwertübernahme ermöglicht, ohne daß hierfür besondere Steuerbefehle des Steuerprogramms der Werkzeugmaschine erforderlich sind.

Die Lösung dieser Aufgabe erhält man durch die im Hauptanspruch angegebenen Merkmale. Die Schalteinrichtung besitzt einen elektrisch steuerbaren Schalter, der von einer Schaltersteuerung in Abhängigkeit einer bestimmten Versorgungsspannung betätigt wird. Die Schaltersteuerung kann zu diesem Zweck beispielsweise an ihrem Eingang mit der Versorgungsleitung der Kühlmittelpumpe der Werkzeugmaschine verbunden sein, so daß beim Einschalten der Kühlmittelpumpe die Versorgungsspannung der Kühlmittelpumpe an dem Eingang der Schaltersteuerung anliegt. Die Schaltersteuerung bewirkt daraufhin, daß wenigstens ein Schalter betätigt wird, wodurch die mit dem Schalter verbundene Meßeinrichtung eine Meßwertübertragung und/oder ein Meßwertverarbeitung vornimmt.

An den steuerbaren Schalter kann eine Meßeinrichtung für die Messung des Drehwinkels und des Vorschubs angeschlossen sein, so daß eine exakte Positionierung eines zu bearbeitenden Werkstücks möglich ist. Beim Schließen des steuerbaren Schalters kann beispielsweise ein Prozessor eine Laser-Meßeinrichtung und eine Winkelmeßeinrichtung bezüglich der momentanen Meßwerte abfragen und daraufhin gegebenenfalls eine Positionskorrektur vornehmen. Je nach Meßeinrichtung können mehrere steuerbare Schalter zur Abfrage der verschiedenen Meßwerte vorgesehen sein. Dabei kann beispielsweise ein Schalter mit einem Eingang des Prozessors verbunden sein, während ein anderer Schalter zur Betätigung der Winkelmeßeinrichtung vorgesehen ist. Die Schaltersteuerung kann bei Auftreten einer Versorgungsspannung unter Verwendung eines Zeitgliedes die Schalter für eine vorgegebene Zeit geschlossen halten, um diese noch dieser Zeitspanne wieder zu öffnen.

Eine Weiterbildung der Erfindung sieht vor, daß die Schaltersteuerung einen Wechselspannungseingang und einen Gleichspannungseingang hat. Dies kann dann erforderlich sein, wenn die der Schaltersteuerung zuzuführenden Versorgungsspannungen sowohl Gleichspannungen oder auch Wechselspannungen sein können. Wird die Schalteinrichtung jedoch fest in den Schaltschrank einer Werkzeugmaschine integriert, dann wird der Eingang der Schaltersteuerung vorzugsweise speziell an die Versorgungsspannung angepaßt, an die die Schaltersteuerung angeschlossen ist.

Die Erfindung wird nachfolgend anhand der Zeichnungen näher erläutert.
Es zeigen:

Figur 1 eine Schalteinrichtung mit angeschlossener Meßeinrichtung,

Figur 2 eine interne und eine externe Schalteinrichtung, an die eine Meßeinrichtung angeschlossen ist,

Figur 3 das Schaltbild der externen Schalteinrichtung von Figur 2 und

Figur 4 das Schaltbild der Schalteinrichtung von Figur 1.

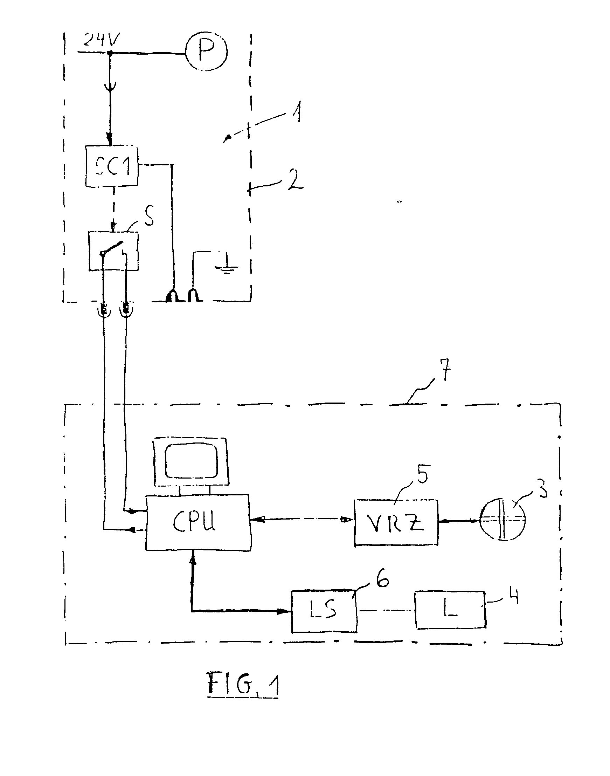

Die in Figur 1 dargestellte Schalteinrichtung 1 ist in einen Schaltschrank 2 einer Werkzeugmaschine integriert und besteht aus einer Schaltersteuerung SC1 und einem steuerbarem Schalter S. Der Eingang E der Schaltersteuerung SC1 ist hier an die elektrische Versorgungsleitung einer Kühlmittelpumpe P angeschlossen, die im Betrieb eine Spannung von 24 Volt hat. Tritt diese Versorgungsspannung auf, bewirkt die Schaltersteuerung SC1, daß der Schalter S geschlossen wird, wodurch ein nachgeschalteter Prozessor CPU veranlaßt wird, die von einer Winkelmeßeinrichtung 3 und einer Lasermeßeinrichtung 4 gelieferten Meßwerte zu übernehmen und zu verarbeiten. Zu diesem Zweck ist zwischen dem Prozessor CPU und der Winkelmeßeinrichtung 3 ein Vorwärts-Rückwärtszähler 5 angeordnet, der das von der Winkelmeßeinrichtung 3 gelieferte Meßergebnis zwischenspeichern kann. Zur Steuerung der Laser-Meßeinrichtung 4 ist eine Lasersteuerung 6 vorgesehen, die zwischen Prozessor CPU und Lasermeßeinrichtung 4 angeordent ist. Der Prozessor CPU und die ihm nachgeschalteten Einrichtungen 5, 3; 6, 4 bilden die Meßeinrichtung 7, die vom Schalter S bei Auftreten der Versorgungsspannung 24 Volt betätigt wird.

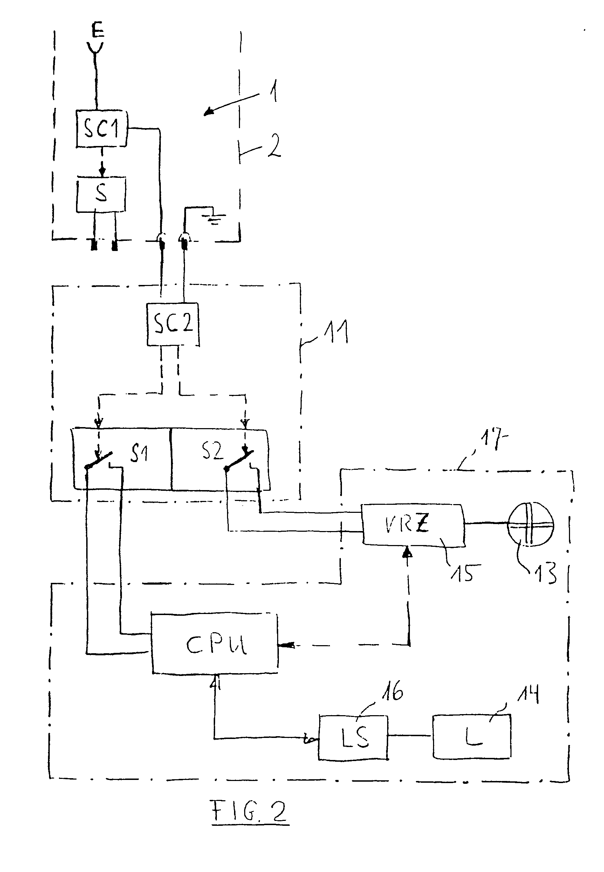

In Figur 2 sind die Anschlußstecker des Schalters S frei, dagegen ist an die Anschlußbuchsen eine externe Schalteinrichtung 11 angeschlossen, deren Schaltersteuerung SC2 zwei Schalter S1, S2 steuert.

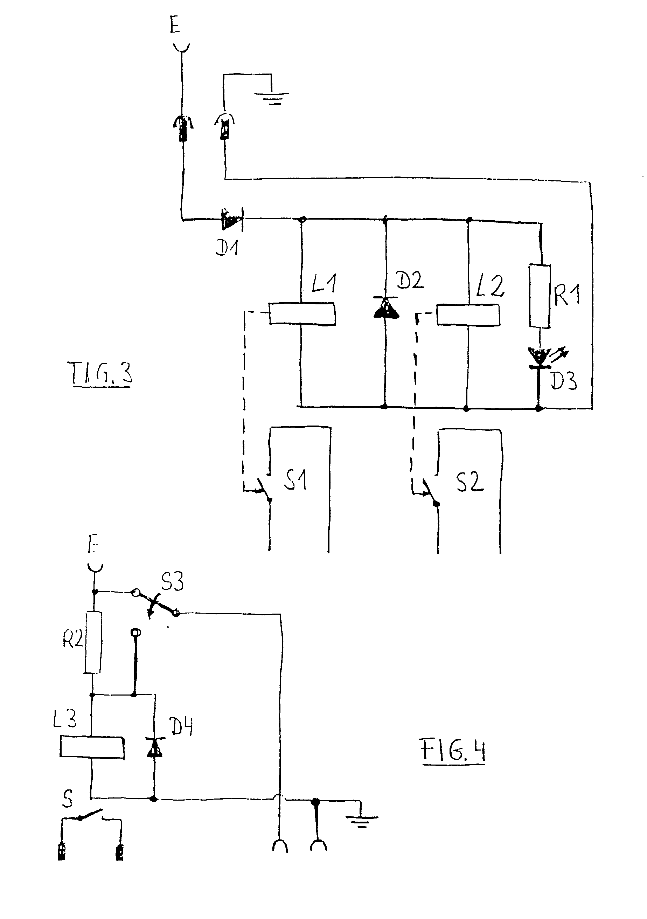

Eine der Anschlußbuchen der Schalteinrichtung 1 ist mit Masse verbunden, während die andere Anschlußbuchse unmittelbar oder über einen Widerstand mit dem Eingang E verbunden ist. Die Schaltersteuerung SC1 ist in Figur 4 und die Schaltersteuerung SC2 in Figur 3 ausführlicher dargestellt.

Die in Figur 2 dargestellte Meßeinrichtung 17 besitzt ebenfalls einen Prozessor CPU und einen Vorwärts-Rückwärtszähler 15, eine Winkelmeßeinrichtung 13, eine Lasersteuerung 16 und eine Lasermeßeinrichtung 14. Bei der Meßeinrichtung 17 ist jedoch der Vorwärts- Rückwärtszähler 15 unmittelbar an den Schalter S2 angeschlossen. Beim Schließen des Schalters S2 übernimmt der Vorwärts-Rückwärtszähler 15 das Meßergebnis der Winkelmeßeinrichtung 13 und speichert dieses Meßergebnis solange, bis der Prozessor CPU dieses Meßergebnis übernommen hat. Die Zwischenspeicherung des Meßergebnisses wird hier also durch den Schalter S2 ausgelöst, während bei der Meßeinrichtung 7 von Figur 1 die Zwischenspeicherung und die Übernahme sämtlicher Meßergebnisse durch den Prozessor CPU veranlaßt werden.

Das in Figur 3 gezeigte Schaltbild enthält eine Diode D1 die mit dem Eingang E verbunden ist. Ihr anderer Anschluß ist mit zwei Relaisspulen L1 und L2 verbunden, die zur Betätigung der Schalter S1 und S2 vorgesehen sind. Als Anzeige des eingeschalteten Zustands ist eine lichtemittierende Diode D3 mit Vorwiderstand R1 vorgesehen. Die Dioden D1 und D2 sind Schutzdioden zum Schutz gegen Überspannungen.

Die in Figur 4 dargestellte Schaltungsanordnung zeigt den internen Aufbau der Schalteinrichtung 1 (Figur 1, Figur 2). Der Eingang E ist über einen Widerstand R2 mit einer Relais-Spule L3 verbunden, die den Antrieb für den Schalter S darstellt. Die Relais-Spule L3 ist mit einer Schutzdiode D4 überbrückt. Außerdem ist ein Umschalter S3 vorgesehen, der die eine Anschlußbuchse in der dargestellten Stellung unmittelbar mit dem Eingang E verbindet. In der nicht dargestellten unteren Stellung ist diese Anschlußbuchse über den Widerstand R2 mit dem Eingang E verbunden.

## Patentansprüche

1. Schalteinrichtung (1, 11) für Meßeinrichtungen (7) von rechnergesteuerten Werkzeugmaschinen, mit einer Schaltersteuerung (SC1, SC2), die wenigstens einen elektrisch steuerbaren Schalter (S, S1, S2) zur Betätigung der Meßeinrichtung (7) aufweist, *dadurch gekennzeichnet,* daß der Eingang (E) der Schaltersteuerung (SC1, SC2) mit einer elektrischen Versorgungsleitung der Kühlmittelpumpe (P) oder der Versorgungsleitung einer anderen elektrischen Einrichtung der Werkzeugmaschine verbunden ist und daß bei Auftreten einer Versorgungsspannung auf der Versorgungsleitung die Schaltersteuerung (SC1, SC2) den Schalter (S, S1, S2) betätigt.

2. Schalteinrichtung nach Anspruch 1, *dadurch gekennzeichnet,* daß an den Schalter (S, S1, S2) eine Meßeinrichtung (7, 17) für die Meßung des Drehwinkels und/oder des Vorschubs angeschlossen sind.

3. Schalteinrichtung nach Anspruch 2, *dadurch gekennzeichnet,* daß beim Schließen des Schalters (S, S1, S2) die momentanen Meßwerte für Drehwinkel und/oder Länge abgespeichert oder anderweitig verarbeitet werden.

4. Schalteinrichtung nach einem der vorhergehenden Ansprüche, *dadurch gekennzeichnet,* daß der Schalter (S, S1, S2) für eine vorgegebene Zeit oder solange an der Schaltersteuerung (SC1, SC2) ein eingangsseitiges Signal anliegt geschlossen ist.

5. Schalteinrichtung nach einem der vorhergehenden Ansprüche, *dadurch gekennzeichnet,* daß die Schaltersteuerung (SC1, SC2) mehrere Schalter (S1, S2) gleichzeitig betätigt.

6. Schalteinrichtung nach einem der vorhergehenden Ansprüche, *dadurch gekennzeichnet,* daß die Schaltersteuerung (SC1, SC2) einen Wechselspannungseingang und einen Gleichspannungseingang hat.

7. Schalteinrichtung nach einem der vorhergehenden Ansprüche, *dadurch gekennzeichnet,* daß die Schalteinrichtung (1, 11) im Schaltschrank (2) der Werkzeugmaschine integriert ist und über von außen zugängliche Anschlußbuchsen und/oder Anschlußstecker mit der Meßeinrichtung (7, 17) verbindbar ist.

## Claims

1. Switching mechanism (1, 11) for the measuring devices (7) of numerically controlled machine tools, with a switch control (SC1, SC2), which has at least one electrically controllable switch (S, S1, S2) for operating the measuring device (7), *characterized* in that the input (E) of switch control (SC1, SC2) is connected to an electrical supply line of coolant pump (P) or the supply lines of another electrical device of the machine tool and that when a supply voltage appears on the supply line, the switch control (SC1, SC2) operates switch (S, S1, S2).

2. Switching mechanism according to claim 1, *characterized* in that a measuring device (7, 17) for measuring the rotation angle and/or the feed is connected to switch (S, S1, S2).

3. Switching mechanism according to claim 2, *characterized* in that on closing switch (S, S1, S2), the instantaneous measured values for the rotation angle and/or length are stored or processed elsewhere.

4. Switching mechanism according to one of the preceding claims, *characterized* in that the switch (S, S1, S2) is closed for a predetermined time or for as long as an input-side signal is applied to switch control (SC1, SC2).

5. Switching mechanism according to one of the preceding claims, *characterized* in that the switch control (SC1, SC2) simultaneously operates several switches (S1, S2).

6. Switching mechanism according to one of the preceding claims, *characterized* in that the switch control (SC1, SC2) has an a.c.voltage input and a d.c.voltage input.

7. Switching mechanism according to one of the preceding claims, *characterized* in that the switching mechanism (1, 11) is integrated into the switch cabinet (2) of the machine tool and is connectable to the measuring device (7, 17) by means of sockets and/or connectors which are accessible from the outside.

**Revendications**

1. Dispositif (1, 11) de commutation pour des dispositifs (7) de mesure de machines-outils à commande numérique, avec une commande (SC1, SC2 ) de commutateur(s) présentant au moins un commutateur (S, S1, S2) électriquement commandable pour actionner le dispositif (7) de mesure, dispositif *caractérisé* en ce que l'entrée (E) de la commande (SC1, SC2) des commutateurs est reliée à un conducteur pour l'alimentation électrique de la pompe (P) du fluide caloporteur ou au conducteur d'alimentation d'un autre dispositif électrique de la machine-outil et en ce que, lors de l'apparition d'une tension d'alimentation sur le conducteur d'alimentation, la commande (SC1, SC2) actionne les commutateurs (S, S1, S2).

2. Dispositif de commutation selon la revendication 1, *caractérisé en* ce qu'au commutateur (S, S1, S2) est associé un dispositif (7, 17) de mesure, pour la mesure de l'angle de rotation et/ou de l'avance.

3. Dispositif de commutation selon la revendication 2, *caractérisé* en ce que, lors de la fermeture du commutateur (S, S1, S2), la valeur de mesure momentanée de l'angle de rotation et/ou de la longueur est sortie de la mémoire ou est traitée d'une autre autre façon.

4. Dispositif de commutation selon l'une des revendications précédentes, caractérisé en ce que le commutateur (S, S1, S2) est fermé pour un temps prédéterminé ou tant qu'un signal est appliqué du côté entrée de la commande SC1, SC2) des commutateurs.

5. Dispositif de commutation selon l'une des revendications précédentes, caractérisé en ce que la commande (SC1, SC2) des commutateurs actionne simultanément plusieurs commutateurs (S1, S2).

6. Dispositif de commutation selon l'une des revendications précédentes, *caractérisé* en ce que la commande (SC1, SC2) des commutateurs comporte une entrée à tension alternative et une entrée à tension continue.

7. Dispositif de commutation selon l'une des revendications précédentes, *caractérisé* en ce que le dispositif (1, 11) de commutation est intégré à une armoire (2) de commande de la machine-outil et peut être relié, par l'intermédiaire de douilles de jonction et/ou de fiches de jonction, accessibles de l'extérieur, au dispositif (7, 17) de mesure.

FIG. 1

FIG. 2

FIG.3

FIG.4